## Europäisches Patentamt

## European Patent Office

## Office européen des brevets

(11) Publication number: **0 189 441 B1**

# EUROPEAN PATENT SPECIFICATION

(45) Date of publication of the patent specification: **01.03.89**

(51) Int. Cl.⁴: **H 02 G 3/08**

(21) Application number: **85903167.6**

(22) Date of filing: **17.06.85**

(86) International application number: **PCT/US 85/01149**

(87) International publication number: **WO 86/01350 (27.02.86 Gazette 86/5)**

(54) **RAIN TIGHT JUNCTION BOX.**

(30) Priority: **20.08.84 US 642012**

(43) Date of publication of application: **06.08.86 Bulletin 86/32**

(45) Publication of the grant of the patent: **01.03.89 Bulletin 89/9**

(84) Designated Contracting States: **FR IT**

(56) References cited:
**CH-A- 192 916**
**CH-A- 647 101**
**DE-A- 1 083 382**
**DE-U- 1 733 365**
**FR-A- 2 219 737**
**US-A- 3 585 273**

(73) Proprietor: **AMP INCORPORATED, P.O. Box 3608 449 Eisenhower Boulevard, Harrisburg Pennsylvania 17105 (US)**

(72) Inventor: **FELDMAN, Steven, 8021 Bayhaven Drive, Seminole, FL 33542 (US)**

(74) Representative: **Gray, Robin Oliver et al, BARON & WARREN 18 South End Kensington, London W8 5BU (GB)**

ACTORUM AG

## Description

The present invention relates to an improved rain tight enclosure for electrical terminals.

Terminal blocks for use outdoors, such as for solar panel installations, must be made rain tight to prevent rain from entering and short-circuiting exposed leads inside. This is conventionally accomplished by a deformable seal, such as a precut elastomeric material, a closed-cell foam, rubber O-rings, etc. These seals are discrete items of manufacture and, therefore, require assembly with a degree of precision which adds to the cost of manufacture and installation. Further, the seals are subject to misalignment and deterioration. A terminal block which would be impervious to rain and, in particular, would not allow moisture into its interior through capillary action would be a vast improvement over what is currently available.

It is know from CH-A-192 916 to provide a water tight enclosure for electrical terminations comprising: a base of integral insulative material defining a central termination cavity; a cover profiled to be received on said base; means to latchingly engage said cover on said base; at least one cable passage extending through the base into the termination cavity; means to seal cables extending therethrough; and cable termination means in the termination cavity.

It is an object to proviede an improved enclosure having the features acknowledged above.

Accordingly the invention is characterised in that said base member and said cover have a mating cross-sectional geometry comprising a peripheral channel extending around the termination cavity and an annular profile having an outwardly facing channel received within the first mentioned peripheral channel, the annular profile having a surrounding channel facing outwardly away from the cavity to divert water flow away from said termination.

In contradistinction to the prior art, the present terminal block is not sealed per se, but can breathe since there are clearances around the mating surfaces. Because the block can breathe, it does not suck water in during changes in atmospheric pressure or during rapid heating or cooling in the weather and moisture from condensation can evaporate out.

The watertight enclosure of the present invention comprises open peripheral channels which fit together to form an enclosed peripheral duct which prevents water from seeping into the enclosure. A gap between the outside and the duct provides an exit for any water which enters therethrough. The channels are suitably dimensioned so that the duct is large enough to prevent filling with water before it flows out. When the box is mounted horizontally, the duct may fill with water, but a high inner wall assures that water will exit through the gap before entering the enclosure.

The present invention will now be described by way of example with reference to the accompanying drawings in which:

Figure 1 is an exploded perspective view of the subject terminal block;

Figure 2 is a top plan view of the subject terminal block; and

Figure 3 is a section taken along line 3–3 figure 2.

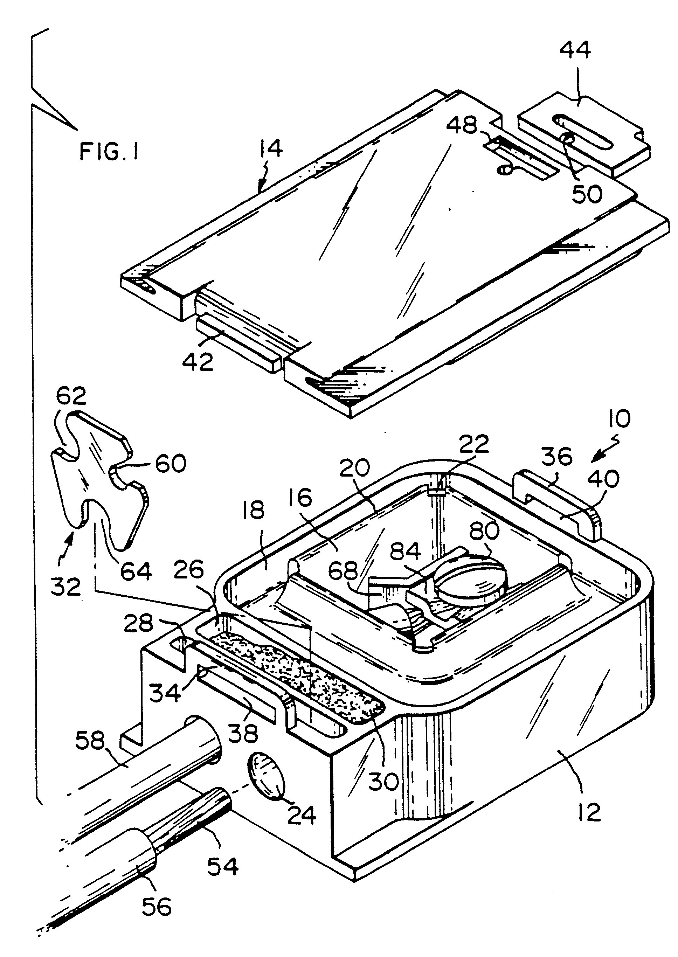

Figure 1 is an exploded perspective view of the rain tight enclosure of the present invention. The subject rain tight terminal block 10 has a base 12 of rigid insulative material and a cover 14 of similar material. The base 12 defines a generally rectangular termination cavity 16 surrounded by a peripheral channel 18 separated by a rectangular flange or web 20 having notches 22 at the respective corners. At least one cable passage 24 extends through one side of the base 12 to open into the cavity 16. Each passage 24 is intersected by a sealing cavity 26 and a strain relief groove 28, the cavity and groove receiving therein, respectively, a sealing member 30 and a strain relief member 32. The base also has cover latching ears 34, 36 defining slots 38, 40, respectively, and can be provided with conventional mounting means (not shown).

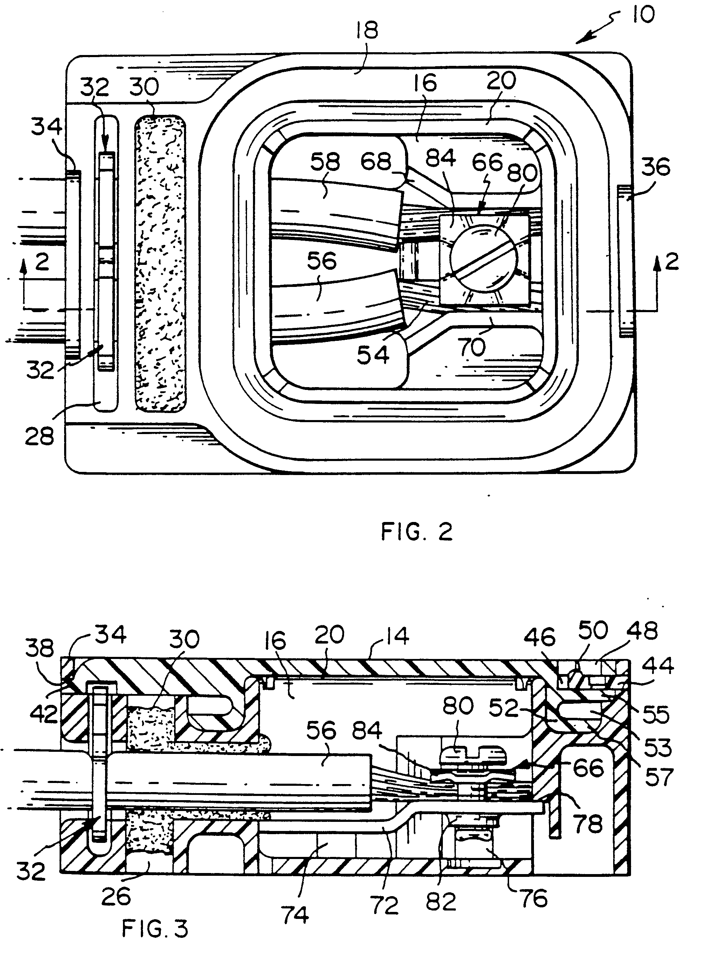

The cover 14 is profiled to be received on the base 12 and has a tine 42 which is received in slot 38 and latching member 44 which is received in groove 46 accessible through slot 48 to engage in slot 40. The latching member 44 is provided with a dimple 50 which holds the latching member in either the open or latched positions. The slot 48 is profiled to allow entry of a bladed tool, such as a screwdriver (not shown) but not a fingernail or the like, to move latching member 44. Groove 46 is also provided with weep holes (not shown) to prevent water and/or ice from blocking movement of the latching member 44. The cover 14 also has an integral inwardly directed annular profile 52, best seen in figure 3, which is received in the channel 18 of the base. An outwardly facing channel 53 is formed in annular profile 52 by upper and lower peripheral parallel flanges 55 and 57. The lower flange on the cover fits into the channel 18 in the base and the upper flange overlaps the outer wall leaving a slight gap providing the only opening to the otherwise enclosed duct about the periphery of the assembly. Since the profile 52 is annular and extends around the base in channel 18, the gap extends around the entire base. This annular gap provides an exit for water which may have collected in channel 18 or the outwardly facing channel in the cover profile 52, regardless of the orientation of the enclosure. It will be noted from figure 3 that the profile 52 fits closely into the channel 18. The notches 22 at the corners of the flange 20 breaks the water seal which forms between the cover and base so that the cavity 16 can breathe without drawing water into the cavity. Thus, changes in temperatures will not cause a wicking action of moisture into the cavity.

It is also possible to form the cover 14 with an umbilical (not shown) to keep it in close proximity to the base 12 when the terminal block is open. The cover 14 has been shown with a surface profile which allows it to be conveniently gripped should access from the sides of the terminal block not be available because of other blocks or structure. The cover 14 could be further profiled to receive labels bearing polarity and/or color codes or these could be molded into the upper surface of the cover.

The cable sealing member 30 is a substantially rectilinear member of resilient material, such as soft, low compression set, closed cell silicon rubber, which is received in the cavity 26 and restrained thereby. Unlike most prior art seals, the resilient material does not have any prepunched holes or openings to that no play is required if only one cable is inserted. The material is such that the conductors 54 and insulation 56 of the cable 58 can penetrate the sealing member 30 as best seen in figure 3, and in so penetrating carry some of the resilient material along the cable periphery to completely fill the passage 24 and even enter the cavity 16. Thus, a total cable seal is provided. Also, it should be noted that should the cable be withdrawn from the housing, the resilient material will effectively close off the passage 24 as it is only displaced by the cable's passage and not destroyed thereby.

The strain relief member 32 shown is a flat rigid member with a triangular configuration, each corner of which is profiled by recesses 60, 62, 64. These recesses are of different sizes so that a wide range of cable diameters can be accommodated in the present terminal block and secured therein by a single strain relief member 32.

The terminal 66 can best be understood from figures 2 and 3. The cavity 16 is provided with a pair of wire guiding walls 68, 70. A plate 72 is mounted in the cavity 16 between walls 68, 70 supported by bosses 74, 76 and engaging shoulder 78. A self threading screw 80, which is also preferably self captivating is received in tapped passage 82 of plate 72 and carries a profiled square lock washer 84. The walls 68, 70 serve to guide the wires 54 of cables 56, 58 to each side of the terminal 66, to prevent rotation of the lockwasher 84 as the screw 80 is tightened, and to prevent spreading of the wires 54 of the cables 56, 58.

## Claims

1. A water tight enclosure (10) for electrical terminations comprising: a base (12) of integral insulative material defining a central termination cavity (16); a cover (14) profiled to be received on said base (12); means (38, 40, 42, 44) to latchingly engage said cover (14) on said base (12); at least one cable passage (24) extending through the base (12) in the termination cavity (16); means to seal cables (58) extending therethrough; and cable termination means (72, 80, 84) in the termination cavity (16); characterized in that said base member (12) and said cover (14) having a mating cross-sectional geometry comprising a peripheral channel (18) extending around the termination cavity (16) and an annular profile (52) having an outwardly facing channel (53) received within the first mentioned peripheral channel, the annular profile (52) having a surrounding channel (53) facing outwardly away from the cavity (16) to divert water flow away from said termination cavity (16).

2. The water tight enclosure (10) of claim 1 wherein the peripheral channel (18) is in the base (12) and the annular profile (52) having an outwardly facing channel (53) is in the cover (14), the first channel (18) being separated from the termination cavity (16) by a flange (20), the cover (14) and the flange (20) being dimensioned to allow air movement into and out of said termination cavity (16).

3. The water tight enclosure according to claim 2 wherein said flange (20) has at least one notch (22) extending between the peripheral channel (18) and the temination cavity (16) so that the termination cavity can breathe without drawing water into said termination cavity (16) with pressure and/or temperature changes.

4. The water tight enclosure of claim 3 wherein sealing means disposed adjacent the cable passages comprises a body (30) of sealant material in a cavity (26) intersecting said at least one cable passage (24), said sealing material being penetrable by a cable driven therethrough to form an annular seal thereabout.

5. The water tight enclosure of claim 4 wherein said body (30) of sealing material is received within a sealing cavity (26) intersecting a plurality of cable passages (24).

6. The water tight enclosure of claim 5 wherein the termination means (72, 80, 84) comprises a plate (72) mounted in said termination cavity (16) having a self threading, self captivating screw (80) therein, and a profiled lock washer (84) on said screw (80).

7. The water tight enclosure of claim 6 further comprising walls (68, 70) in said termination cavity (16) serving to guide cables (58) to said screw (80).

8. The water tight enclosure of claim 2 wherein the outwardly facing channel (53) is formed by upper and lower peripheral parallel flanges (55, 57), the upper flange overlapping the body (12) leaving a gap about the periphery of the cover (14) communicating with the outwardly facing channel (53).

## Patentansprüche

1. Wasserdichte Ummantelung (10) für elektrische Verbindungen, mit: einer Basis (12) aus einstückigem, isolierenden Material, die einen zentralen Anschließhohlraum (16) definiert; einer Abdeckung (14) mit einem zur Aufnahme auf der Basis (12) ausgelegten Profil; einer Einrichtung (38, 40, 42, 44) zum verriegelnden in Eingriff Bringen der Abdeckung (14) auf der Basis (12); wenigstens einem Kabeldurchtritt (24), der sich in dem Anschließhohlraum (16) durch die Basis (12) hindurcherstreckt; einer Einrichtung zum Abdichten von sich durch diesen hindurcherstreckenden Kabeln (58); und einer Kabelanschließeinrichtung (72, 80, 84) in dem Anschließhohlraum (16); dadurch gekennzeichnet, daß das Basisglied (12) und die Abdeckung (14) eine Verbindungsquerschnittsgeometrie aufweisen, die einen sich um den Anschließhohlraum (16) herumerstreckenden umlaufenden Kanal (18) sowie ein ringförmiges Profil (52) umfaßt, das einen nach außen weisenden Kanal (53) aufweist, der innerhalb des erstgenannten umlaufenden Kanals aufgenommen ist, wobei das ringförmige Profil (52) einen dieses umgebenden Kanal (53) aufweist, der von dem Hohlraum (16) weg nach außen weist, um Wasserflüsse von dem Hohl-Anschließhohlraum (16) weg abzuleiten.

2. Wasserdichte Ummantelung (10) nach Anspruch 1, dadurch gekennzeichnet, daß der umlaufende Kanal (18) in der Basis (12) und das ringförmige Profil (52) mit einem nach außen weisenden Kanal (53) in der Abdeckung (14) vorgesehen ist, wobei der erstgenannte Kanal (18) durch einen Flansch (20) von dem Anschließhohlraum (16) getrennt ist, und wobei die Abdeckung (14) und der Flansch (20) derart dimensioniert sind, daß eine Luftbewegung in den Anschließhohlraum (16) hinein sowie aus diesem heraus ermöglicht ist.

3. Wasserdichte Ummantelung nach Anspruch 2, dadurch gekennzeichnet, daß der Flansch (20) wenigstens eine Einkerbung (22) aufweist, die sich zwischen dem umlaufenden Kanal (18) und dem Anschließhohlraum (16) erstreckt, so daß der Anschließhohlraum atmen kann, ohne bei Druck- und/oder Temperaturänderungen Wasser in den Anschließhohlraum (16) einzuziehen.

4. Wasserdichte Ummantelung nach Anspruch 3, dadurch gekennzeichnet, daß eine angrenzend an die Kabeldurchtritte angeordnete Abdichteinrichtung einen Körper (30) aus Abdichtmaterial in einem den wenigstens einen Kabeldurchtritt (24) schneidenden Hohlraum (26) umfaßt, wobei das Abdichtmaterial von einem durch dieses hindurchgetriebenen Kabel derart durchdringbar ist, daß es eine ringförmige Dichtung um dieses herum bildet.

5. Wasserdichte Ummantelung nach Anspruch 4, dadurch gekennzeichnet, daß der Körper (30) aus Abdichtmaterial innerhalb eines eine Mehrzahl von Kabeldurchtritten (24) schneidenden Abdichthohlraums (26) aufgenommen ist.

6. Wasserdichte Ummantelung nach Anspruch 5, dadurch gekennzeichnet, daß die Anschließeinrichtung (72, 80, 84) eine in dem Anschließhohlraum (16) montierte Platte (72), die eine selbstgewindeschneidende, selbstfestziehende Schraube (80) enthält, sowie eine mit einem Profil versehene Sicherungsscheibe (84) an der Schraube (80) umfaßt.

7. Wasserdichte Ummantelung nach Anspruch 6, weiterhin gekennzeichnet durch in dem Anschließhohlraum (16) vorhandene Wände (68, 70), die zum Führen von Kabeln (58) zu der Schraube (80) hin dienen.

8. Wasserdichte Ummantelung nach Anspruch 2, dadurch gekennzeichnet, daß der nach außen weisende Kanal (53) durch einen oberen und einen unteren umlaufenden Flansch (55, 57) gebildet ist, die zueinander parallel sind, wobei der obere Flansch den Körper (12) unter Freilassung eines um den Umfang der Abdeckung (14) herumlaufenden Spalts überlappt, der mit dem nach außen weisenden Kanal (53) in Verbindung steht.

**Revendications**

1. Enceinte (10) étanche à l'eau pour terminaisons électriques, comprenant: une embase (12) réalisée d'une seule pièce en matière isolante, définissant une cavité centrale (16) à terminaisons; un couvercle (14) profilé de façon à être reçu sur ladite embase (12); des moyens (38, 40, 42, 44) destinés à enclencher et verrouiller ledit couvercle (14) sur ladite embase (12); au moins un passage (24) de câble s'étendant à travers l'embase (12) dans la cavité (16) à terminaisons; des moyens destinés à assurer l'étanchéité des câbles (58) s'étendant à travers l'enceinte; et des moyens (72, 80, 84) de terminaisons de câbles situés dans la cavité (16) à terminaisons; caractérisé en ce que ledit élément d'embase (12) et ledit couvercle (14) ont une géométrie complémentaire, en section transversale, comprenant une rainure périphérique (18) s'étendant autour de la cavité (16) à terminaisons et un profilé annulaire (52) ayant une rainure (53) tournée vers l'extérieur, reçue dans la première rainure périphérique mentionnée, le profilé annulaire (52) ayant une rainure entourante (53) tournée vers l'extérieur, à l'écart de la cavité (16), pour dévier l'écoulement de l'eau à l'écart de ladite cavité (16) de terminaisons.

2. Enceinte (10) étanche à l'eau selon la revendication 1, dans laquelle la rainure périphérique (18) est située dans l'embase (12) et le profilé annulaire (52), présentant une rainure (53) tournée vers l'extérieur, est situé dans le couvercle (14), la première rainure (18) étant séparée de la cavité (16) de terminaisons par un rebord (20), le couvercle (14) et le rebord (20), étant dimensionnés pour permettre à de l'air de pénétrer dans ladite cavité (16) à terminaisons et d'en sortir.

3. Enceinte étanche à l'eau selon la revendication 2, dans laquelle ledit rebord (20) présente au moins une encoche (22) s'étendant entre la rainure périphérique (18) et la cavité (16) à terminaisons afin que la cavité à terminaisons puisse respirer sans que de l'eau soit aspirée à l'intérieur de ladite cavité (16) à terminaisons avec les variations de pression et/ou de température.

4. Enceinte étanche à l'eau selon la revendication 3, dans laquelle des moyens d'étanchéité disposés à proximité immédiate des passages de câbles comprennent un corps (30) en matière d'étanchéité dans une cavité (26) coupant ledit, au moins un, passage de câble (24), ladite matière d'étanchéité pouvant être traversée par un câble enfoncé à travers elle pour former un joint étanche annulaire autour de lui.

5. Enceinte étanche à l'eau selon la revendication 4, dans laquelle ledit corps (30) en matière d'étanchéité est reçu à l'intérieur d'une cavité (26) d'étanchéité coupant plusieurs passages (24) de câbles.

6. Enceinte étanche à l'eau selon la revendication 5, dans laquelle les moyens (72, 80, 84) de terminaisons comprennent une plaque (72) montée dans ladite cavité (16) à terminaisons et dans laquelle se trouve une vis auto-taraudeuse et auto-bloquante (80), et une rondelle profilée (84) de blocage située sur ladite vis (80).

7. Enceinte étanche à l'eau selon la revendication 6, comprenant en outre des parois (68, 70) situées dans ladite cavité (16) à terminaisons et servant à guider des câbles (58) vers ladite vis (80).

8. Enceinte étanche à l'eau selon la revendication 2, dans laquelle la rainure (53) tournée vers l'extérieur est formée par des rebords parallèles périphériques supérieur et inférieur (55, 57), le rebord supérieur chevauchant le rebord (12) en laissant un espace le long de la périphérie du couvercle (14), communiquant avec la rainure (53) tournée vers l'extérieur.

1/2

FIG. 1

FIG. 2

FIG. 3